**Europäisches Patentamt**

**European Patent Office**

**Office européen des brevets**

(19)

(11) Numéro de publication : **0 091 329**
**B1**

(12)

# FASCICULE DE BREVET EUROPÉEN

(45) Date de publication du fascicule du brevet :
**28.05.86**

(21) Numéro de dépôt : **83400443.4**

(22) Date de dépôt : **04.03.83**

(51) Int. Cl.⁴ : **F 16 K 31/48, F 16 K 21/12,
G 04 F 3/02**

(54) **Robinet mélangeur à fermeture temporisée par une minuterie.**

(30) Priorité : **02.04.82 FR 8205734**

(43) Date de publication de la demande :
**12.10.83 Bulletin 83/41**

(45) Mention de la délivrance du brevet :
**28.05.86 Bulletin 86/22**

(84) Etats contractants désignés :
**AT BE CH DE GB IT LI LU NL SE**

(56) Documents cités :
**EP-A- 0 021 957**
**DE-A- 1 927 045**
**DE-C- 842 564**
**FR-A- 2 409 429**
**FR-A- 2 413 699**
**US-A- 2 719 538**
**US-A- 3 638 682**

(73) Titulaire : **LES ROBINETS PRESTO Société anonyme dite:**
**7, rue Racine**
**F-92120 Montrouge (FR)**

(72) Inventeur : **Delbare, Pierre Albert**
**39, rue de la Voix Verte**
**F-91260 Juvisy sur Orge (FR)**

(74) Mandataire : **Vander-Heym, Roger**
**172 Boulevard Voltaire**
**F-75011 Paris (FR)**

Jouve, 18, rue St-Denis, 75001 Paris, France

## Description

La présente invention est relative à un robinet mélangeur à fermeture temporisée correspondant au préambule de la revendication 1 et connu du document EP-A-21 957.

Dans ce document EP-A-21 957 on a décrit un robinet mélangeur comportant une tête de manœuvre assurant une double fonction : l'ouverture du robinet par son enfoncement et le réglage de la température du mélange par sa rotation. Dans ce robinet, la temporisation à la fermeture était déterminée par le temps mis par l'eau sous pression pour traverser un orifice calibré prévu dans un piston, pouvant se déplacer dans un boîtier, l'eau pénétrant dans la chambre ainsi formée repoussant le piston, pourvu d'un clapet, contre le siège du robinet pour l'obturer.

L'expérience a montré que la durée de la temporisation dépendait de plusieurs paramètres (friction, pression de l'eau notamment) qui étaient difficiles à maîtriser et rendaient le réglage délicat, voire incertain.

Pour remédier à cet inconvénient, on a eu l'idée d'utiliser une minuterie dont la rotation de l'arbre déterminait celle d'une came agissant directement sur la queue du clapet. Un tel dispositif, qui est décrit notamment dans la demande de brevet français FR-A-2 413 699, permet un réglage précis de la temporisation mais provoque des bruits intempestifs, connus sous le nom de « coup de bélier », lors de la fermeture qui intervient trop brutalement puisque le clapet est ramené contre son siège sous l'action d'un ressort. Par ailleurs, ce robinet mélangeur comporte deux organes de manœuvre l'un pour commander la minuterie et provoquer l'ouverture du robinet et l'autre, pour régler la température de l'eau. Ces deux organes sont rotatifs et obligent l'usager à des manœuvres auxquelles il n'est pas habitué, les robinets à fermeture temporisée étant généralement commandés par un bouton-poussoir. On connaît aussi par le document DE-A-1 927 045 un robinet dans lequel le soulèvement du clapet auxiliaire est obtenu par une paire de cames sous l'action de l'enfoncement d'un bouton poussoir qui comprime un ressort monté sur la tige dudit clapet et dont la détente, freinée par un mécanisme de minuterie, rappelle le clapet auxiliaire contre son siège aidé en cela par la pression de l'eau appliquée audit clapet.

La présente invention, qui remédie à ces inconvénients, est relative à un robinet mélangeur à fermeture temporisée comportant un corps, un bouton-poussoir, un piston de temporisation coulissant dans une chambre de temporisation et portant le clapet principal, un siège pour ledit clapet, qui est prévu sur un boisseau de mélange réglant par sa rotation les arrivées d'eau froide et d'eau chaude et constituant une chambre de mélange, une queue sur ledit boisseau pour l'entraîner en rotation, une chambre de sortie de l'eau mélangée et un clapet auxiliaire qui s'appuie sur un siège auxiliaire sous l'action d'un ressort et d'une tige de commande, caractérisé en ce que la durée de la temporisation est réglée par une minuterie logée dans un boîtier comportant une platine supportée par une pièce liée en rotation à ladite queue, en ce que la minuterie présente un arbre pourvu d'un doigt en forme de vé pouvant se loger dans une entaille, également en forme de vé, prévue dans un embout porté par un tube, formant la tige de commande du clapet auxiliaire, ledit embout coulissant dans la pièce et en ce que le clapet auxiliaire est formé par un épaulement dudit tube qui traverse axialement le piston et communique par une extrémité avec la chambre de temporisation et par l'autre avec celle de sortie.

Un mode particulier de réalisation de l'invention apparaît dans la revendication dépendante 2.

D'autres caractéristiques apparaîtront mieux par la description qui va suivre, faite en se référant aux dessins annexés à titre d'exemple indicatif seulement, sur lesquels :

La figure 1 est une vue en coupe longitudinale du robinet de l'invention, tous les organes mobiles étant représentés en position de « fermeture » du robinet ;

La figure 2 est une vue analogue à la figure 1, les organes mobiles étant représentés en position d'« ouverture » ;

La figure 3 est une vue en coupe effectuée selon la ligne III-III de la figure 1 ;

La figure 4 est une vue en coupe effectuée selon la ligne IV-IV de la figure 1 ;

La figure 5 est une section selon la ligne V-V de la figure 1 ;

La figure 6 est une section selon la ligne VI-VI de la figure 1 ;

La figure 7 est une vue en coupe effectuée selon la ligne VII-VII de la figure 1 ;

La figure 8 est une vue en coupe effectuée selon la ligne VIII-VIII de la figure 7 ;

La figure 9 est une vue en perspective éclatée montrant la configuration des deux organes permettant, lors du remontage de la minuterie, de soulever le clapet auxiliaire ;

La figure 10 est une vue en perspective du boîtier d'entraînement de l'arbre de la minuterie en vue du remontage de cette dernière.

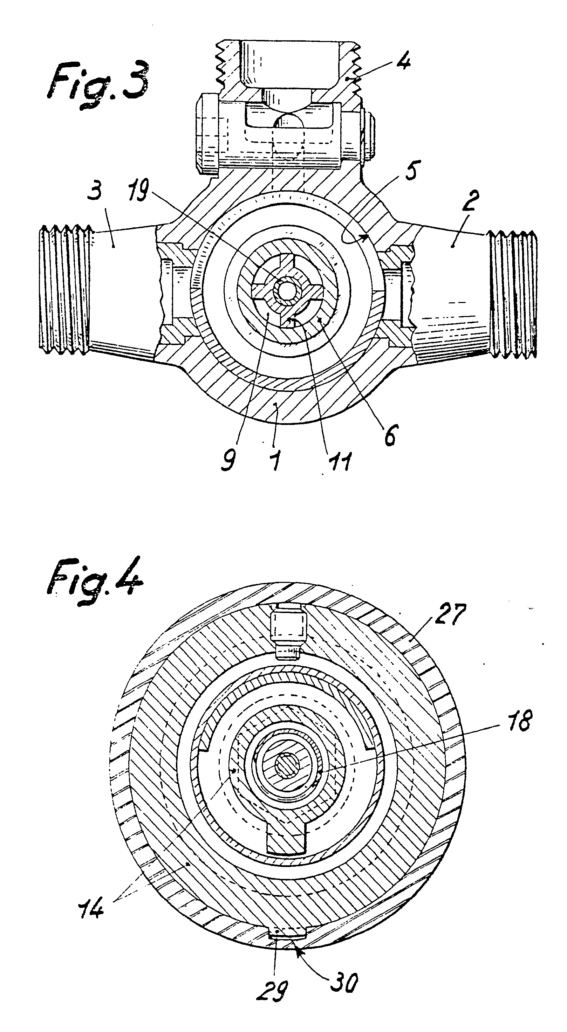

En se reportant aux dessins, on voit que le robinet se compose d'un corps 1 présentant deux embouts 2 et 3 diamétralement opposés d'arrivée, respectivement de l'eau chaude et de l'eau froide, et un embout 4 de sortie de l'eau mélangée (figure 3).

Les embouts 2 et 3 débouchent dans un alésage 5 cylindrique du corps 1 dans lequel est logé et peut tourner un boisseau cylindrique de mélange 6 tel que celui décrit dans la demande de brevet FR-A-2 413 699 précitée.

De la façon connue, le boisseau 6 comporte le siège 7 du robinet faisant communiquer la chambre de mélange 8 et la chambre de sortie 9. Le siège 7 est normalement obturé par un clapet 10 porté par un piston 11 pouvant se déplacer dans la partie borgne de l'alésage 5 et dont la fonction sera décrite plus loin.

De la façon connue, encore, le corps 1 est obturé par un bouchon 12 dans lequel peut tourner la queue 13 du boisseau 6.

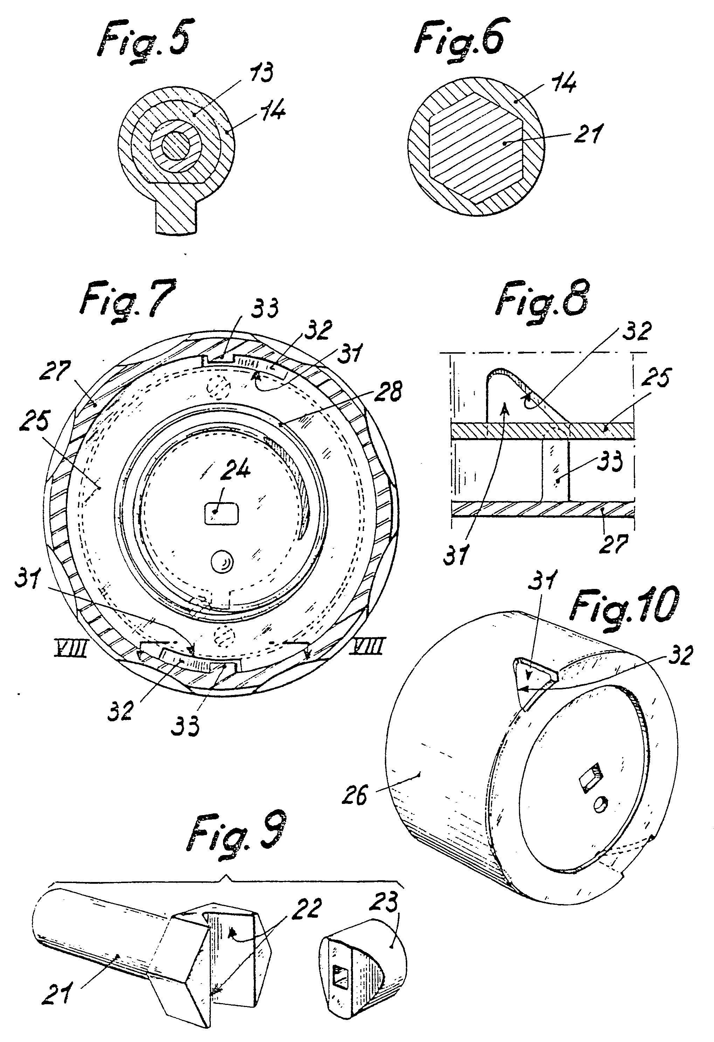

Selon la présente invention, la queue 13 est liée en rotation·à une pièce 14 (figure 5) de support de la platine d'une minuterie schématisée en 15.

La chambre 5a formée par le fond de l'alésage 5 et le piston 11 débouche dans la chambre de sortie 9 par l'entremise d'un clapet auxiliaire 16 normalement appliqué contre son siège 17, porté par la queue 13 du boisseau, par l'entremise d'un ressort 18.

A cet effet, le clapet auxiliaire 16 est constitué par un épaulement prévu sur un tube 19 traversant librement le piston 11.

La chambre 5a communique avec la chambre de mélange 8 par l'entremise d'un orifice 20 prévu dans le piston 11.

Le tube 19 est rendu solidaire d'un embout 21, coulissant, lié en rotation à la pièce 14, comme montré sur la figure 6.

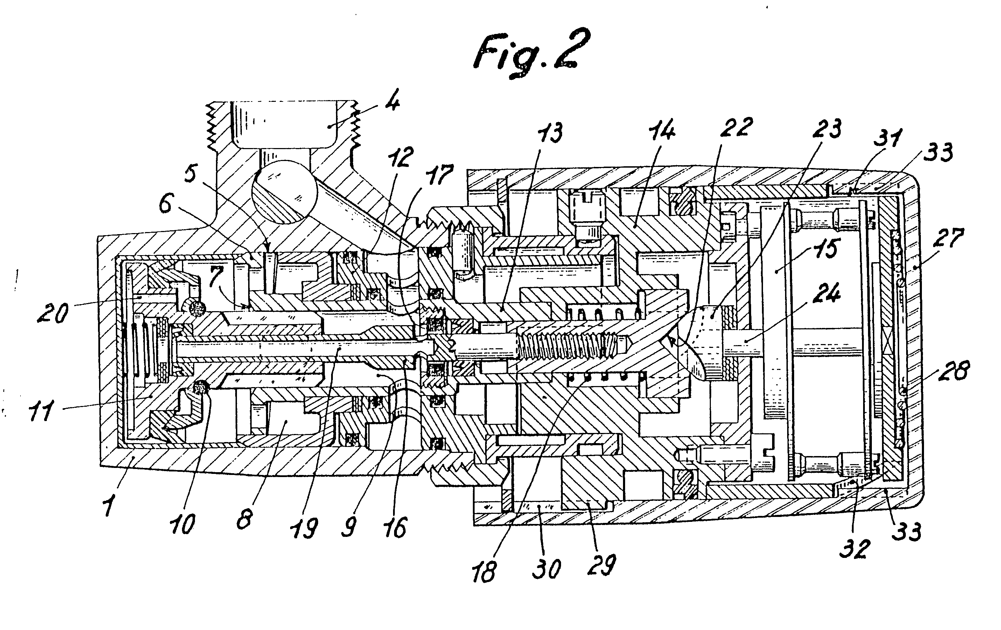

L'embout 21 présente à son extrémité libre une entaille 22 (figures 2 et 9) en forme de Vé, dans laquelle peut se loger un doigt 23 présentant une section triangulaire lié en rotation à l'arbre 24 de la minuterie.

Lors du remontage de la minuterie, l'arbre 24 pivote en entraînant le doigt 23 qui agit comme une came dans l'entaille 22 en repoussant l'embout 21 ce qui a pour effet de déterminer le soulèvement du clapet auxiliaire 16 et, par suite, de faire communiquer la chambre 5a et celle de sortie 9. A ce moment, la pression de l'eau d'arrivée repousse le piston 11 en déterminant le soulèvement du clapet 10 (figure 2).

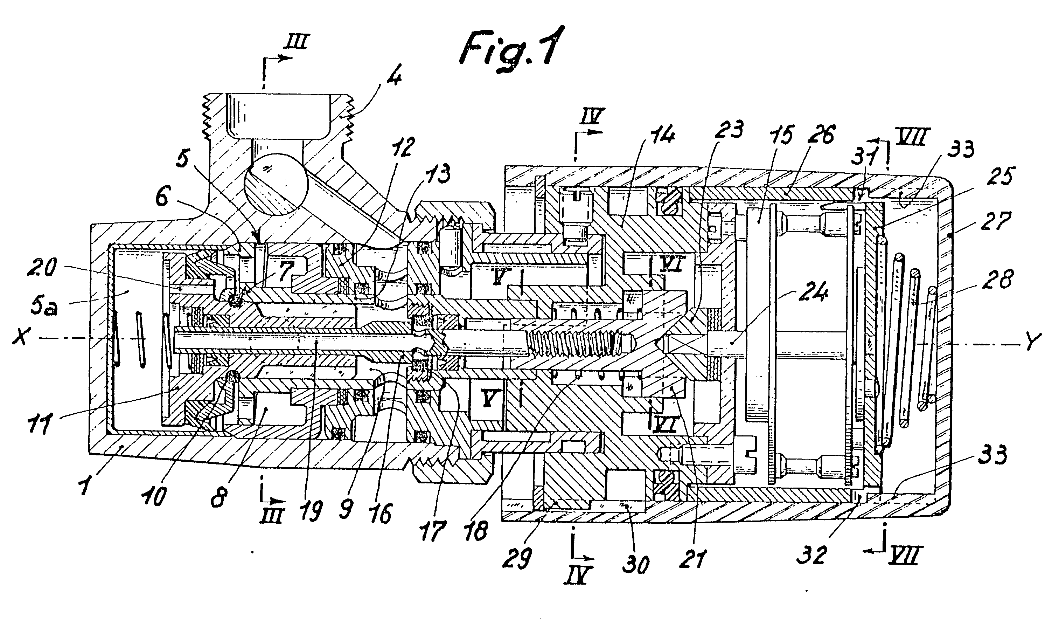

Durant la détente du ressort de la minuterie, l'arbre 24 pivote en sens inverse et progressivement le doigt 23 revient à sa position initiale telle que montrée sur la figure 1.

A la fin de ce mouvement, le clapet auxiliaire 16 obture la chambre 5a. L'eau, qui pénètre rapidement dans cette dernière, par l'orifice 20, repousse le piston 11 et ramène le clapet 10 contre son siège. Le diamètre de l'orifice 20 est suffisamment important pour que le temps de déplacement du piston soit très bref, de l'ordre d'une seconde, pour éviter les coups de bélier dus à la brusque interruption du circuit de fluide. D'une façon générale, comme le temps nécessaire à la fermeture du clapet est très bref, les fluctuations de celui-ci résultant de paramètres incontrôlables sont négligeables devant la durée de la temporisation à la fermeture déterminée par la minuterie.

On va maintenant décrire un dispositif permettant le remontage de la minuterie. A cet effet, l'arbre 24 est lié en rotation au fond d'un boîtier 26 recouvrant ladite minuterie et l'ensemble est lui-même recouvert par un bouton 27, en forme de boîtier.

Un ressort 28 est interposé entre le fond du bouton 27 et celui 25 du boîtier 26 qui est lié en rotation à la pièce 14 présentant, à cet effet, un bossage 29 formant clavette coulissante, engagé dans une rainure 30 longitudinale dudit bouton, 27.

Le boîtier 26 présente sur sa jupe et à proximité du fond 25 deux encoches 31, diamétralement opposées, (figure 10) présentant chacune un flanc 32, formant rampe, qui s'étend obliquement par rapport à l'axe X-Y du robinet et susceptible de coopérer avec un bossage 33 prévu à l'intérieur du bouton 27.

De cette façon, en enfonçant le bouton 27 on détermine la rotation du boîtier 26 ce qui a pour effet de faire pivoter l'arbre 24 de la minuterie en déterminant simultanément le remontage de cette dernière et le soulèvement du clapet auxiliaire 16.

En relâchant le bouton 27, celui-ci recule, repoussé par le ressort 28, et l'arbre 24 entraîné par le mécanisme de la minuterie pivote progressivement en sens inverse.

Comme le bouton 27 est lié en rotation à la pièce 14 d'entraînement du boisseau 6, il est aussi possible, par une rotation dudit bouton, de régler la température du mélange.

### Revendications

1. Robinet mélangeur à fermeture temporisée comportant un corps (1), un bouton-poussoir (27), un piston de temporisation (11) coulissant dans une chambre de temporisation (5a) et portant le clapet principal (10), un siège (7) pour ledit clapet, qui est prévu sur un boisseau de mélange (6) réglant par sa rotation les arrivées d'eau froide et d'eau chaude et constituant une chambre de mélange (8), une queue (13) sur ledit boisseau pour l'entraîner en rotation, une chambre de sortie (9) de l'eau mélangée et un clapet auxiliaire (16) qui s'appuie sur un siège auxiliaire (17) sous l'action d'un ressort (18) et d'une tige de commande, caractérisé en ce que la durée de la temporisation est réglée par une minuterie (15), logée dans un boîtier (26), comportant une platine supportée par une pièce (14) liée en rotation à la dite queue (13), en ce que la minuterie présente un arbre (24) pourvu d'un doigt (23) en forme de vé pouvant se loger dans une entaille (22), également en forme de vé, prévue dans un embout (21) porté par un tube (19), formant la tige de commande du clapet auxiliaire, ledit embout coulissant dans la pièce (14) et en ce que le clapet auxiliaire (16) est formé par un épaulement dudit tube (19) qui traverse axialement le piston (11) et communique par une extrémité avec la chambre de temporisation (5a) et par l'autre avec celle de sortie (9).

2. Robinet selon la revendication 1, caractérisé en ce que l'arbre (24) de la minuterie est lié en rotation au boîtier (26) qui présente, au moins, une rampe (32) s'étendant obliquement par rapport à son axe longitudinal et susceptible de coopérer avec un bossage (33) prévu à l'intérieur du bouton-poussoir (27), recouvrant l'ensemble, ledit bouton-poussoir étant lié, en rotation seulement, à la pièce (14) et en ce qu'un ressort (28) est interposé entre le fond (25) du boîtier (26) et ledit bouton-poussoir.

## Claims

1. Timer-activated self-closing mixing valve consisting of a body (1), a pushbutton (27), a timing piston (11) sliding in a timing chamber (5a) and holding the main valve (10), a seat (7) for the aforementioned valve which is provided on a mixer faucet key (6) adjusting by ist rotation the incoming hot and cold water and forming a mixing chamber (8), a tail (13) on the aforementioned faucet key to drive it in rotation, an outlet chamber (9) for the mixed water and a secondary valve (16 which rests on a secondary seat (17) activated by a spring (18) and a control rod, characterised by the fact that the timing period is set by a timer (15), housed in a box (26), comprising a supported plate with a part (14) linked in rotation to the aforementioned tail (13), and that the timer has a shaft (24) equipped with a V shaped pin (23) which can fit into a notch (22), also V-shaped, provided in an end fitting (21) supported by a tube (19), forming the control rod of the secondary valve, the aforementioned end fitting sliding in the part (14) and by the fact that the secondary valve (16) is formed by a collar of this tube (19) which axially crosses the piston (11) and connects with one end to the timing chamber (5a) and with the other to the outlet chamber (9).

2. Valve as in claim 1, characterised by the fact that the shaft (24) of the timer is linked in rotation with the box (26) which has, at least, one ramp (32) positioned transversely in relation to its longitudinal axis and able to work in conjunction with a boss provided inside the pushbutton (27), covering the whole unit, the aforementioned pushbutton linked, in rotation only, to the part (14) and by the fact that a spring (28) is inserted between the base (25) of the box (26) and the pushbutton.

## Patentansprüche

1. Selbstschließendes Mischventil mit Zeitschaltwerk bestehend aus einem Gehäuse (1), einem Drucktaster (27), einem Verzögerungskolben (11), der in einer Verzögerungskammer (5a) gleitet und ein Hauptventil (10) trägt, einem Sitz (7) für dieses Ventil, das auf einem Mischhahn (6) vorgesehen ist, der durch seine Drehung die Zufuhr des kalten und Warmen Wassers regelt und eine Mischkammer (8) bildet, einem Endstück (13) auf diesem Mischhahn für dessen Drehantrieb, einer Ausgangskammer (9) des gemischten Wassers und einem Hilfsventil (16), das unter Einwirkung einer Feder (18) und eines Steuerstößels auf einen Hilfssitz (17) drückt, dadurch gekennzeichnet, daß die Verzögerungsdauer durch ein Zeitschaltwerk (15) in einem Gehäuse (26) eingestellt wird, das aus einer von einem Teil (14) getragene Platine besteht, die drehend mit dem Endstück (13) verbunden ist, weiterhin dadurch, daß das Zeitschaltwerk eine Welle (24) besitzt, die mit einem V-förmigen Stift (23) ausgerüstet ist, der in eine ebenfalls V-förmige Aussparung (22) einfahren kann, die in einem Ansatzstück (21) vorgesehen ist, das von einem Rohr (19) getragen wird, das den Steuerstößel des Hilfsventils bildet, wobei das Ansatzstück in dem Teil (14) gleitet und dadurch, daß das Hilfsventil (16) durch eine Wulst des Rohres (19) gebildet wird, das den Kolben (11) axial durchquert und durch ein Ende mit der Verzögerungskammer (5a) und mit dem anderen Ende mit dem Ausgang (9) verbunden ist.

2. Mischventil gemäß Anspruch 1, dadurch gekennzeichnet, daß die Welle (24) des Zeitschaltwerkes drehend mit dem Gehäuse (26) verbunden ist, das mindestens eine Rampe (32) besitzt, die schräg zu seiner Längsachse verläuft und mit einer Aussparung (33), die innen im Drucktaster (27), der alles abdeckt, vorgesehen ist, zusammenwirken kann, wobei dieser drucktaster nur drehend mit dem Teil (14) verbunden ist und dadurch, daß zwischen der Unterseite (25) des Gehäuses (26) und diesem Drucktaster eine Feder (28) eingesetzt ist.

Fig.1

Fig. 2

**Fig.3**

**Fig.4**

Fig.5

13
14

Fig.6

14
21

Fig.7

33
32
31
27
25
28
24
31
VIII
VIII
32
33

Fig.8

32
25
33
31
27

Fig.10

31
32
26

Fig.9

22
23
21

4